# EUROPEAN PATENT APPLICATION

(11) **EP 2 928 164 A1**
(43) Date of publication of application: **07.10.2015**
(21) Application number: 13800387.6
(22) Date of filing: 11.07.2013
(51) Int. Cl.: H04M 1/725, H04M 3/42

(54) **TRANSMISSION METHOD AND DEVICE FOR VOICE DATA**

(30) Priority: 27.12.2012 CN 201210578430
(71) Applicant: ZTE Corporation, Shenzhen, Guangdong 518057 (CN)
(72) Inventor: YU, Liyan, Shenzhen Guangdong 518057 (CN)
(74) Representative: Gervasi, Gemma
(86) International application number: PCT/CN2013/079201
(87) International publication number: WO 2013/182118

(57) **Abstract**

A method and device for transmitting voice data are disclosed. The method includes: based on a preset statement database to be adjusted, monitoring voice data sent by a sending end; when monitoring that the above voice data are required to be adjusted, adjusting the above voice data according to a set standard voice format; and transmitting the adjusted voice data to a receiving end. With the method and device of the embodiments of the present invention, the problem that the communication effect is affected when the mobile user is in an abnormal emotional state in the related art is solved, which is conducive to maintaining the personal image, improving the work effect, and enhancing the interpersonal ability.

## Description

### Technical Field

The present invention relates to the field of mobile communication, and particularly, to a method and device for transmitting voice data.

### Background of the Related Art

With the rapid development of the modern communication technology, people's working ranges are expanded greatly, and mobile devices such as a mobile phone have gradually become one of the most important means for communications between people in the "global village". When a user uses the mobile devices such as the mobile phone to make a voice call with others and solves a larger number of miscellaneous affairs in work and life, it is inevitable that the condition of emotional excitement or loss of control will occur, thus communication effect is affected, and even an irreparable consequence may be caused.

If the user is in an abnormal emotional state in the call process, such as rage and anger and so on, the communications between users will be easily affected. Especially for users who are engaged in jobs such as marketing and sales and public relations, they will be misunderstood by the opposite side due to improper words caused by the temporary out-of-control emotion in the call process, which will directly influence the personal image and work effect.

With respect to the problem that the communication effect is affected when the mobile user is in an abnormal emotional state in the related art, no effective solution has been provided at present.

### Summary of the Invention

With respect to the problem that the communication effect is affected when the mobile user is in an abnormal emotional state in the related art, the embodiments of the present invention provide a method and device for transmitting voice data, to solve the above technical problem.

The embodiment of the present invention provides a method for transmitting voice data, which comprises:
based on a preset statement database to be adjusted, monitoring voice data required to be sent by a sending end;
when monitoring that the voice data are required to be adjusted, adjusting the voice data according to a set standard voice format; and
transmitting adjusted voice data to a receiving end.

Alternatively, based on a preset statement database to be adjusted, the step of monitoring voice data sent by a sending end comprises:
extracting a characteristic parameter in the voice data; and based on whether the characteristic parameter is matched with a first characteristic parameter stored in the statement database to be adjusted, monitoring the voice data; and/or,
extracting a vocabulary in the voice data; and based on whether the vocabulary is matched with a preset vocabulary stored in the statement database to be adjusted, monitoring the voice data.

Alternatively, after the step of monitoring that the voice data are required to be adjusted, the method further comprises: sending a prompt signal.

Alternatively, the step of adjusting the voice data according to a set standard voice format comprises:
acquiring a pitch frequency parameter of the voice data, and according to the set standard voice format, adjusting the pitch frequency parameter of the voice data in accordance with a time domain synchronization algorithm and a pitch frequency adjustment parameter; and/or,
acquiring voice energy of the voice data, and according to the set standard voice format, adjusting the voice energy in accordance with an energy adjustment parameter; and/or,
extending a statement duration of the voice data according to the set standard voice format.

Alternatively, the step of adjusting the voice data according to a set standard voice format comprises:
searching whether a polite vocabulary corresponding to the preset vocabulary exists in the statement database to be adjusted; and
when the polite vocabulary corresponding to the preset vocabulary exists, replacing the preset vocabulary with the polite vocabulary.

The embodiment of the present invention further provides a device for transmitting voice data, which comprises:
a monitoring module, configured to: based on a preset statement database to be adjusted, monitor voice data required to be sent by a sending end;
an adjustment module, configured to: when monitoring that the voice data are required to be adjusted, adjust the voice data according to a set standard voice format; and
a transmission module, configured to: transmit adjusted voice data to a receiving end.

Alternatively, the monitoring module comprises:
a first monitoring unit, configured to: extract a characteristic parameter in the voice data; and based on whether the characteristic parameter is matched with a first characteristic parameter stored in the statement database to be adjusted, monitor the voice data; and/or,
a second monitoring unit, configured to: extract a vocabulary in the voice data; and based on whether the vocabulary is matched with a preset vocabulary stored in the statement database to be adjusted, monitor the voice data.

Alternatively, the device further comprises:
a prompt module, configured to: send a prompt signal.

Alternatively, the adjustment module comprises:
a first adjustment unit, configured to: acquire a pitch frequency parameter of the voice data, and according to the set standard voice format, adjust the pitch frequency parameter of the voice data in accordance with a time domain synchronization algorithm and a pitch frequency adjustment parameter; and/or,
a second adjustment unit, configured to: acquire voice energy of the voice data, and according to the set standard voice format, adjust the voice energy in accordance with an energy adjustment parameter; and/or,
a third adjustment unit, configured to: extend a statement duration of the voice data according to the set standard voice format.

Alternatively, the adjustment module further comprises:
a searching unit, configured to: search whether a polite vocabulary corresponding to the preset vocabulary exists in the statement database to be adjusted; and
a replacement unit, configured to: in a case that a search result of the searching unit is that the polite vocabulary corresponding to the preset vocabulary exists in the statement database to be adjusted, replace the preset vocabulary with the polite vocabulary.

With the method and device of the embodiments of the present invention, the problem that the communication effect is affected when the mobile user is in an abnormal emotional state in the related art is solved, which is conducive to maintaining the personal image, improving the work effect, and enhancing the interpersonal ability.

### Brief Description of Drawings

FIG. 1 is a flow chart of a method for transmitting voice data according to the embodiment of the present invention.
FIG. 2 is a block diagram of structure of a device for transmitting voice data according to the embodiment of the present invention.
FIG. 3 is a block diagram of the first specific structure of the device for transmitting voice data according to the embodiment of the present invention.
FIG. 4 is a block diagram of the preferred structure of the device for transmitting voice data according to the embodiment of the present invention.
FIG. 5 is a block diagram of the second specific structure of the device for transmitting voice data according to the embodiment of the present invention.
FIG. 6 is a schematic diagram of structure of an adjustment module according to the embodiment of the present invention.
FIG. 7 is a block diagram of structure of a mobile terminal framework according to the embodiment of the present invention.
FIG. 8 is a schematic diagram of a self-learning process of an emotion voice database according to the embodiment of the present invention.
FIG. 9 is a schematic diagram of a flow of a radical statement correction module performing voice data adjustment according to the embodiment of the present invention.
FIG. 10 is a schematic diagram of an adjustment effect of the statement pitch frequency according to the embodiment of the present invention.
FIG. 11 is a schematic diagram of an adjustment effect of the statement duration according to the embodiment of the present invention.
FIG. 12 is a flow chart of the process of emotion control and adjustment in the voice call according to the embodiment of the present invention.

### Preferred Embodiments of the Invention

In order to solve the problem that the communication effect is affected for the mobile terminal user is in a negative emotion in the related art, the embodiments of the present invention provide a method and device for transmitting voice data. The embodiments of the present invention will be further described in detail in combination with the accompanying drawings below. The embodiments in the present invention and the characteristics in the embodiments can be optionally combined with each other in the condition of no conflict.

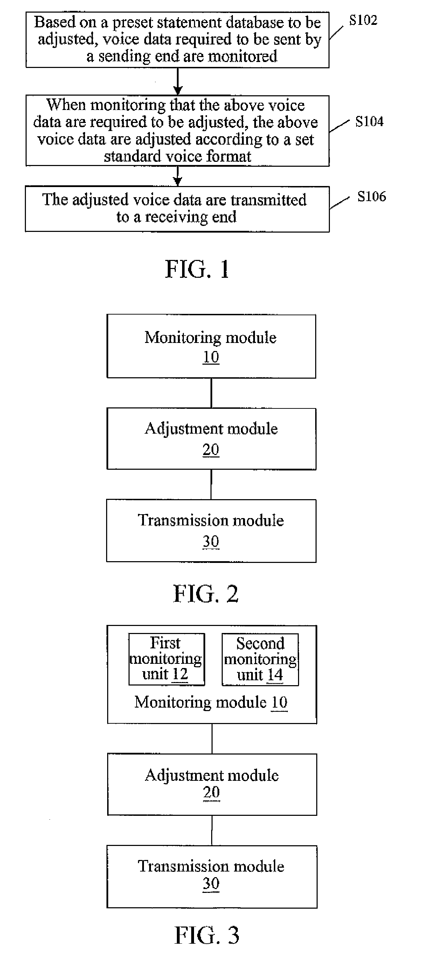

The embodiment provides a method for transmitting voice data, and the method can be implemented at a mobile side. FIG. 1 is a flow chart of the method for transmitting the voice data according to the embodiment of the present invention, and as shown in FIG. 1, the method includes the following steps (step S102-step S106).

In step S102, based on a preset statement database to be adjusted, voice data required to be sent by a sending end are monitored.

In step S104, when monitoring that the above voice data are required to be adjusted, the above voice data are adjusted according to a set standard voice format.

In step S106, the adjusted voice data are transmitted to a receiving end.

With the above method, the problem that the communication effect is affected when the mobile user is in an abnormal emotional state in the related art is solved, which is conducive to maintaining the personal image, improving the work effect, and enhancing the interpersonal ability.

In the embodiment, it is to monitor whether voice data are required to be adjusted, monitoring whether the voice data are required to be adjusted can be implemented in various ways, no matter which ways are adopted, whether the voice data are required to be adjusted should be monitored, that is, whether a user at the sending end of the voice data is in an abnormal emotional state should be monitored. Based on this, the embodiment provides a preferred embodiment, that is, based on a preset statement database to be adjusted, the step of monitoring the voice data sent by the sending end includes: extracting a characteristic parameter in the voice data; and based on whether the above characteristic parameter is matched with a first characteristic parameter stored in the above statement database to be adjusted, monitoring the above voice data; and/or, extracting a vocabulary in the above voice data; and based on whether the above vocabulary is matched with a preset vocabulary stored in the above statement database to be adjusted, monitoring the above voice data. Through the above preferred embodiment, monitoring whether the sending end is in the abnormal emotional state is implemented, which provides a basis for adjusting the voice data sent by the sending end in the above case later.

When the user is in abnormal emotional states (such as rage and anger and so on), the user's voice is different from the voice in a normal state, therefore, it is to judge whether the user is in the abnormal emotional state according to the characteristic parameter extracted in the voice data in the above preferred embodiment, which improves the efficiency and accuracy of the monitoring in the abnormal emotional state. The characteristic parameter can be a speech speed, an average pitch, a pitch range, strength and pitch change and so on.

In addition, the above first characteristic parameter can be a characteristic parameter when the user is in the abnormal emotional state, and the above preset vocabulary can be an indecent vocabulary when the user is in the abnormal emotional state. Certainly, the above characteristic parameter also can be compared with a characteristic parameter possessed by the user in the normal emotional state, and when the above characteristic parameter and the characteristic parameter possessed by the user in the normal emotional state are not matched, the voice data are adjusted. The characteristic parameter in the normal emotional state and the characteristic parameter in the abnormal state can be stored in the preset statement database to be adjusted, which improves the execution efficiency and execution accuracy of the above comparison operation.

The process of monitoring whether the preset vocabulary is included in the voice data can be implemented through the following preferred embodiment: extracting the vocabulary in the voice data; comparing the extracted vocabulary with the preset vocabulary; and determining whether the preset vocabulary is included in the voice data according to a comparison result. Alternatively, the above preset vocabulary can be stored in the preset statement database to be adjusted, and the preset vocabulary in the preset statement database to be adjusted can be automatically set, and the preset vocabulary also can be updated in real time according to the user's requirements according to the practical situation of the sending end.

After monitoring that the voice data sent by the sending end are required to be adjusted, that is, the sending end is in the abnormal emotional state, the embodiment provides a preferred embodiment, that is, a prompt signal is sent. The prompt signal can be a prompt tone or vibration, which is used for reminding the user to control emotion, tones and expressions and so on when communicating with other users.

In addition, the execution opportunity of the two actions of sending the prompt signal and monitoring the voice data is not limited. For example, the prompt signal can be firstly sent, and the voice data are adjusted in the case that permission is obtained from the user at the sending end; or sending the prompt signal and monitoring the voice data are executed simultaneously. That is, the user at the sending end can set to automatically execute the operation of adjusting the voice data, or a confirmation step can be set, after receiving the prompt signal, it is to confirm whether to execute the operation of adjusting the voice data. How to set specifically can be determined according to the practical situation.

After monitoring that the voice data sent by the sending end are required to be adjusted, that is, the user at the sending end is in the abnormal emotional state, it is required to adjust the voice data, a specific adjustment policy can be implemented in various ways, as long as the voice data sent by the user at the sending end in the abnormal emotional state can be adjusted to the voice data in the normal state. Based on this, the embodiment provides a preferred embodiment, that is, a pitch frequency parameter of the above voice data is acquired, and according to the set standard voice format, the pitch frequency parameter of the above voice data is adjusted in accordance with a time domain synchronization algorithm and a pitch frequency adjustment parameter; and/or, voice energy of the above voice data is acquired, and according to the set standard voice format, the above voice energy is adjusted in accordance with an energy adjustment parameter; and/or, a statement duration of the above voice data is extended according to the set standard voice format.

In another adjustment way, it also can search whether a polite vocabulary corresponding to the preset vocabulary exists in the statement database to be adjusted; and when the polite vocabulary corresponding to the preset vocabulary exists, the preset vocabulary is replaced with the polite vocabulary.

With regard to the above two adjustment ways, they can be selectively executed according to the above two ways for monitoring whether the preset vocabulary is included in the voice data, or they can be specifically determined according to the practical situation. Through the above preferred embodiment, the adjustment of the voice data in the negative emotional state is implemented, thus adverse impact of the negative emotion on the communication is avoided, which is conducive to maintaining the personal image, improving the work effect, and enhancing the interpersonal ability.

Corresponding to the method for transmitting the voice data introduced in the above embodiment, the embodiment of the present invention provides a device for transmitting voice data, and the device can be set at the mobile side, which is used for implementing the above embodiment. FIG. 2 is a block diagram of structure of the device for transmitting the voice data according to the embodiment of the present invention, and as shown in FIG. 2, the device includes: a monitoring module 10, an adjustment module 20 and a transmission module 30. The structure will be described in detail below.

The monitoring module 10 is configured to: based on a preset statement database to be adjusted, monitor voice data required to be sent by a sending end;
the adjustment module 20 is connected to the monitoring module 10, and configured to: when monitoring that the above voice data are required to be adjusted, adjust the above voice data according to a set standard voice format; and
the transmission module 30 is connected to the adjustment module 20, and configured to transmit the adjusted voice data to a receiving end.

Through the above device, the problem that the communication effect is affected when the mobile user is in an abnormal emotional state in the related art is solved, which is conducive to maintaining the personal image, improving the work effect, and enhancing the interpersonal ability.

In the embodiment, monitoring whether the voice data are required to be adjusted can be implemented in various ways, and the embodiment provides a preferred embodiment with respect to this, in a block diagram of the first specific structure of the device for transmitting the voice data shown in FIG. 3, besides all the above modules shown in the FIG. 2, the device also includes a first monitoring unit 12 and/or a second monitoring unit 14 included in the above monitoring module 10. The structure will be introduced in detail below.

The first monitoring unit 12 is configured to: extract a characteristic parameter in the voice data; and based on whether the above characteristic parameter is matched with a first characteristic parameter stored in the above statement database to be adjusted, monitor the above voice data; and/or,
the second monitoring unit 14 is configured to: extract a vocabulary in the voice data; and based on whether the above vocabulary is matched with a preset vocabulary stored in the above statement database to be adjusted, monitor the above voice data.

In the preferred embodiment, the monitoring module 10 can monitor whether the voice data are required to be adjusted with the structure of the first monitoring unit 12, or monitor whether the voice data are required to be adjusted with the structure of the second monitoring unit 14, or use the structures of the above first monitoring unit 12 and second monitoring unit 14 together, thereby improving the monitoring accuracy. In FIG. 3, only the preferred structure of the monitoring module 10 including the first monitoring unit 12 and the second monitoring unit 14 is taken as an example to make descriptions.

Monitoring whether the voice data are required to be adjusted, that is, monitoring whether the sending end is in the abnormal emotional state can be implemented by the first monitoring unit 12 with various preferred structures. Alternatively, the first monitoring unit 12 can judge whether the voice data meet a preset condition according to the characteristic parameter in the voice data, and a preferred structure of the first monitoring unit 12 will be introduced below.

The above first monitoring unit 12 includes: a comparison subunit, configured to: compare the characteristic parameter with the first characteristic parameter; wherein the first characteristic parameter is the characteristic parameter of the sent voice data when the sending end is in the abnormal emotional state; and a determination subunit, configured to: determine whether the voice data are required to be adjusted according to a comparison result.

Through the above preferred structure, the efficiency and accuracy of the monitoring are improved when the user of the sending end is in the abnormal emotional state. The above characteristic parameter can be a speech speed, an average pitch, a pitch range, strength and pitch change and so on. Certainly, the above characteristic parameter also can be compared with a characteristic parameter possessed by the user in the normal emotional state, and when the above characteristic parameter and the characteristic parameter possessed by the user in the normal emotional state are not matched, the voice data are adjusted. The characteristic parameter in the normal emotional state and the characteristic parameter in the abnormal state can be stored in the preset statement database to be adjusted, which improves the execution efficiency and execution accuracy of the above comparison operation.

Monitoring the preset vocabulary can be implemented by the second monitoring unit 14 with various preferred structures. Alternatively, the second monitoring unit 14 can monitor whether the voice data meet a preset condition according to whether the preset vocabulary is included in the voice data, and a preferred structure of the second monitoring unit 14 will be introduced below.

The above second monitoring 14 includes: a vocabulary extraction subunit, configured to: extract the vocabulary in the voice data; a vocabulary comparison subunit, configure to: match the above vocabulary extracted by the above vocabulary extraction subunit with the preset vocabulary; and a vocabulary determination subunit, configure to: determine whether the preset vocabulary is included in the voice data according to a comparison result. Alternatively, the above preset vocabulary can be stored in the preset statement database to be adjusted, and the preset vocabulary in the preset statement database to be adjusted can be automatically set, and the preset vocabulary also can be updated in real time according to the user's requirements according to the practical situation of the sending end. Through the above preferred structure, the efficiency and accuracy of the monitoring in the negative emotional state are improved.

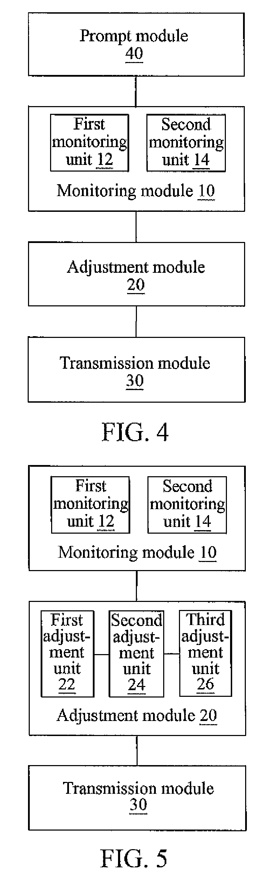

After the monitoring module 10 monitors that the voice data are required to be adjusted, that is, the user of the sending end is in the abnormal emotional state, the embodiment provides a preferred embodiment, and as shown in FIG. 4, besides all the above modules shown in FIG. 3, the above device also includes: a prompt module 40, configured to send a prompt signal in a case that a monitoring result of the above monitoring module 10 is that the voice data are required to be adjusted. The prompt signal can be a prompt tone or vibration, which is used for reminding the user to control emotion, tones and expressions and so on when communicating with other users. In addition, the execution opportunity of the two actions of sending the prompt signal and monitoring the voice data is not limited, which has been described before and will not be repeated here.

After the monitoring module 10 monitors that the voice data are required to be adjusted, that is, the user at the sending end is in the abnormal emotional state, the adjustment module 20 is required to adjust the voice data, a specific adjustment policy of the adjustment module 20 can be implemented in various ways, as long as the voice data sent by the sending end in the abnormal emotional state can be adjusted to the voice data in the normal state. Based on this, the embodiment provides a preferred structure, in a block diagram of the second specific structure of the device for transmitting the voice data shown in FIG. 5, besides all the above modules shown in the FIG. 3, the device also includes a first adjustment unit 22, a second adjustment unit 24 and a third adjustment unit 26 included in the above adjustment module 20. The structure will be described below.

The first adjustment unit 22 is configured to: acquire a pitch frequency parameter of the above voice data, and according to the set standard voice format, adjust the pitch frequency parameter of the above voice data in accordance with a time domain synchronization algorithm and a pitch frequency adjustment parameter; and/or,
the second adjustment unit 24 is connected to the first adjustment unit 22, and configured to: acquire voice energy of the above voice data, and according to the set standard voice format, adjust the above voice energy in accordance with an energy adjustment parameter; and/or,
the third adjustment unit 26 is connected to the second adjustment unit 24, and configured to extend a statement duration of the above voice data according to the set standard voice format.

In FIG. 4, the above adjustment module 20 including the above three adjustment units is taken as an example to make descriptions.

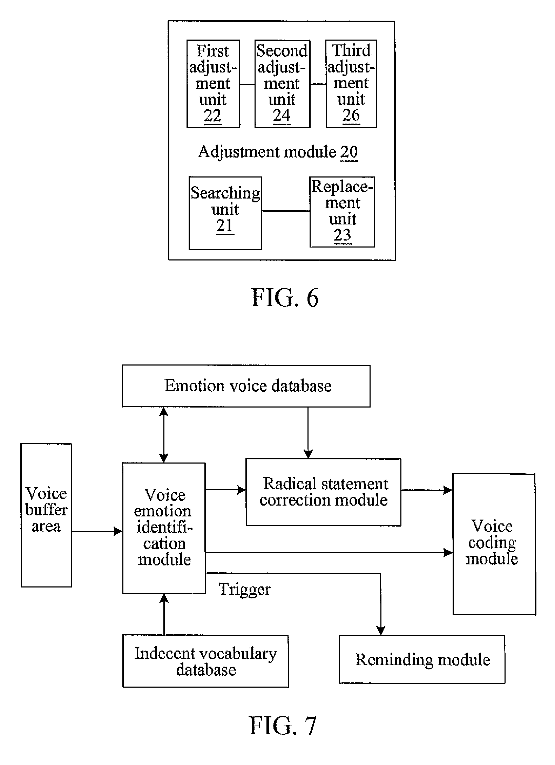

In addition, the embodiment also provides a preferred structure, as shown in FIG. 6, the above adjustment module 20 also includes: a searching unit 21, configured to: search whether a polite vocabulary corresponding to the above preset vocabulary exists in the statement database to be adjusted; and a replacement unit 23, configured to: in a case that a search result of the above searching unit is that the polite vocabulary corresponding to the preset vocabulary exists in the statement database to be adjusted, replace the above preset vocabulary with the above polite vocabulary.

Through the above preferred structure, the adjustment of the voice data in the abnormal emotional state is implemented, thus adverse impact of the abnormal emotion on the communication is avoided, which is conducive to maintaining the personal image, improving the work effect, and enhancing the interpersonal ability.

Based on the device for transmitting the voice data introduced in the above embodiment, the method for transmitting the voice data will be introduced through the preferred embodiment below. FIG. 7 is a block diagram of structure of a mobile terminal framework according to the embodiment of the present invention, the mobile terminal framework includes a voice input device (not shown in FIG. 7), a voice buffer area, a voice emotion identification module, an emotion voice database, a reminding module, a radical statement correction module, an indecent vocabulary database and a voice coding module. The basic functions and features of all the modules will be introduced respectively below.

The voice input device is configured to: according to a certain sampling frequency, channel and bit, receive voice information from the sending end. Since the voice frequency range of the telephone is about 60∼3400HZ, generally a sampling rate is 8KHZ. The sound is input via a microphone of the mobile phone, and transcribed into a WAV file in a standard Pulse-Code Modulation (PCM) coded format through an 8KHZ sampling rate and a 16bit monaural audio format, and stored in the voice buffer area.

The voice buffer area is configured to: receive and store the uncompressed voice file input by the input device to be analyzed and processed by the following module.

The main function of the voice emotion identification module is equivalent to the function of the monitoring module 10 in the above embodiment, and the voice emotion identification module is configured to: extract an emotion characteristic parameter of the voice data in the voice buffer area in real time, and judge and identify whether the emotion of the user at the sending end is out of control (that is, in the abnormal emotional state) during the call according to the emotion characteristic parameter, and judges whether an indecent vocabulary exists in the call in the meantime.

When one person is in the abnormal emotional states such as rage or anger and so on, generally the emotion will be out of control. According to the study of the acoustics experts, when one is in the emotional states of rage, fear and happiness, the sympathetic nerve plays a leading role, which is mainly reflected as a loud voice, a faster speech speed and large voice energy. However, when one is in an angry state, it is mainly reflected as that the tone is high and changed greatly, generally a sentence-initial pitch frequency is low, and the pitch frequency at the end of sentence is high. Moreover, many heavy syllables are contained in the voice, but the last word is not stressed. Common emotion characteristic parameters are introduced in Table 1. Wherein, the duration of vocal cords opening and closing once namely a vibration period is called a tone period or a pitch period, and a reciprocal thereof is called a pitch frequency, and it also can be called a radical frequency for short.

**Table 1**

| **Emotion characteristic parameters** | **Parameter definitions** |
|---|---|
| Speech speed | Number of syllables in unit time, namely speech speed |
| Average pitch | Mean value of pitch frequency |
| Pitch range | Variation range of pitch frequency |
| Strength | Strength of voice signal, mean value of amplitude |
| Pitch change | Average rate of change of pitch frequency |

Table 2 includes the features of the emotion characteristic parameters when the user is in the angry state, and whether the user's emotion is angry can be identified through these emotion characteristic parameters.

**Table 2**

| **Emotion characteristic parameters** | **Anger** |
|---|---|
| Speech speed | A bit fast |
| Average pitch | Very high |
| Pitch range | Very wide |
| Strength | High |
| Pitch change | Significant change in stress |
| Articulation | Vague |

In addition, when talking with people, someone unselfconsciously likes to say some indecent vocabularies, and though the speaker is unintentional, the listener thinks that it is intentional, thus a contradiction and misunderstanding will be generated unselfconsciously, which will not only affect the personal image, but also influence the interpersonal relationship. Therefore, besides judging the emotion, the voice emotion identification module also will make a comparison with the indecent vocabulary library, to judge whether an indecent vocabulary is contained in the statement at this point, and if there is an indecent vocabulary, the location of the indecent vocabulary is marked. When the voice emotion identification module monitors that the user is in the angry state and the indecent wording is contained in the call process, the reminding module of the mobile phone will be triggered to remind the user to adjust the emotion and pay attention to the diction, which avoids causing words hurt to others due to emotion being out of control.

The main function of the reminding module is equivalent to the function of the prompt module 40 in the above embodiment, the reminding module is configured to: remind the user whether the emotion is excited or whether the indecent vocabulary is contained in the call process by means of vibration or prompt tone. Through the reminding module, it is convenient for the user to control his/her own emotion in time.

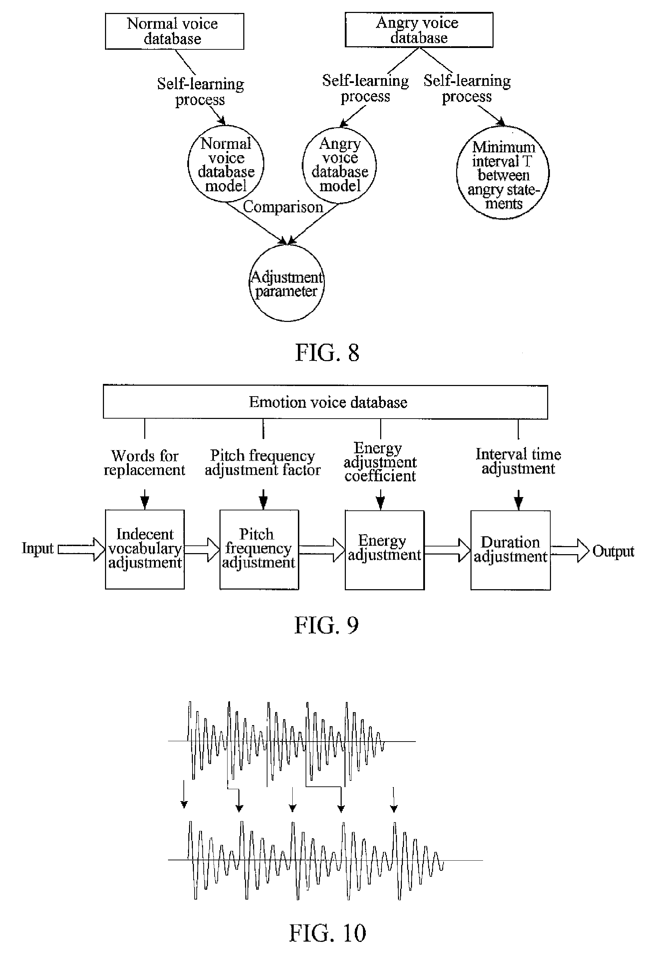

The main function of the emotion voice database is to store characteristic parameters in the normal emotion required by the comparison subunit in the above embodiment and polite vocabularies required by the searching unit in the above embodiment. FIG. 8 is a schematic diagram of a self-learning process of the emotion voice database according to the embodiment of the present invention, and as shown in FIG. 8, the emotion voice database can set a self-learning ability. When the mobile phone is just out of factory, the emotion voice database stored in the mobile phone is an emotion voice database conforming to different crowds and established according to factors such as age and gender and so on, and it includes emotion characteristic parameters in a normal call, emotion characteristic parameters in an angry call, and a polite word vocabulary database. Here, an emotion voice database storing the emotion characteristic parameters in the normal call is defined as a normal voice database; and an emotion voice database storing the emotion characteristic parameters in the anger is defined as an angry voice database. After the mobile phone is out of factory and is used by the user, the user's emotion will be judged according to the initial setting of the emotion voice database at the beginning, and the emotion voice database will correct and adjust the emotion characteristic parameters when the user is in the normal call and in the anger call through the self-learning in the meantime, and it finally compares the two groups of parameters to obtain an adjustment parameter, which is used for the following module adjusting the angry statement. In addition, the angry voice database is also used for counting a minimum interval time T between statements in the angry state, which prepares for adjusting the subsequent angry statement.

The main function of the indecent vocabulary database is equivalent to the function of the above indecent vocabulary library, the indecent vocabulary database is configured to: store indecent vocabularies universally acknowledged by the public; meanwhile, the main function of the indecent vocabulary database is equivalent to the function of the second monitoring unit 14 in the above embodiment, and the indecent vocabulary database is also configured to: judge whether the user has an indecent vocabulary in the call process. The indecent vocabularies universally acknowledged by the public have been set in the indecent vocabulary database when the mobile phone is out of factory, and the user can execute update operations, such as addition or deletion, on the indecent vocabularies in the indecent vocabulary database through manual input or network in the daily usage process.

The main function of the radical statement correction module is equivalent to the function of the adjustment module 20 in the above embodiment, and the radical statement correction module is configured to: adjust the statement when the user is in the abnormal emotional states such as anger and so on. FIG. 9 is a schematic diagram of a flow of the radical statement correction module performing voice data adjustment according to the embodiment of the present invention, and as shown in FIG. 9, the flow includes the following steps.

In step one, according to the location of the indecent vocabulary in the statement input by the user and marked by the voice emotion identification module, the indecent vocabulary is replaced; first, it is to search whether there is an appropriate substitute in the polite word vocabulary database, if there is an appropriate substitute, the indecent vocabulary is replaced, and if there is no appropriate substitute, the marked location of the indecent vocabulary is kept.

In step two, a pitch frequency parameter of the statement is adjusted. Since the pitch frequency of the statement in the normal call is relatively uniform, and a pitch frequency value of a pitch frequency of the call in anger is higher when compared with the normal and is significantly changed, the pitch frequency of the whole sentence in anger can be adjusted to the pitch frequency in the normal voice with reference to a pitch frequency adjustment parameter counted by the emotion voice database through a Time Domain Pitch Synchronous Overlap Add (TD-PSOLA) algorithm. FIG. 10 is a schematic diagram of an adjustment effect of the statement pitch frequency according to the embodiment of the present invention, as shown in FIG. 10, through the pitch frequency adjustment, the pitch frequency is decreased, and the pitch frequency of the call in anger is adjusted to the pitch frequency of the normal call.

The above TD-PSOLA algorithm can be divided into three steps to complete the adjustment of the pitch frequency.

In the first step, a pitch period of the voice in anger is extracted, and the pitch marking is performed.

In the second step, according to a pitch frequency adjustment factor in the emotion voice database, the pitch frequency of the whole sentence in anger is adjusted to the pitch frequency in the normal voice.

In the third step, the corrected voice elements are jointed through a certain smoothing algorithm.

In step three, energy of the statement is adjusted. The energy can be enlarged or lessened by multiplying energy at a certain time by one coefficient, and the coefficient at this point can have been counted in the emotion voice database, and the speech stream output in the step two is multiplied by the coefficient, and if the indecent vocabulary is not replaced in the step one, the voice energy of the indecent vocabulary is multiplied by a very small coefficient here, so that the called party is difficult to hear the indecent vocabulary.

In step four, the statement is adjusted by adjusting the duration of the statement. A syllable pronunciation duration when the user is in abnormal emotional states, such as anger, is shorter than the normal. Moreover, in order to avoid the phenomenon of packet loss, the statement in anger can be appropriately lengthened to ease the effect of anger, and the TD-PSOLA algorithm also can be used in the adjustment of the duration.

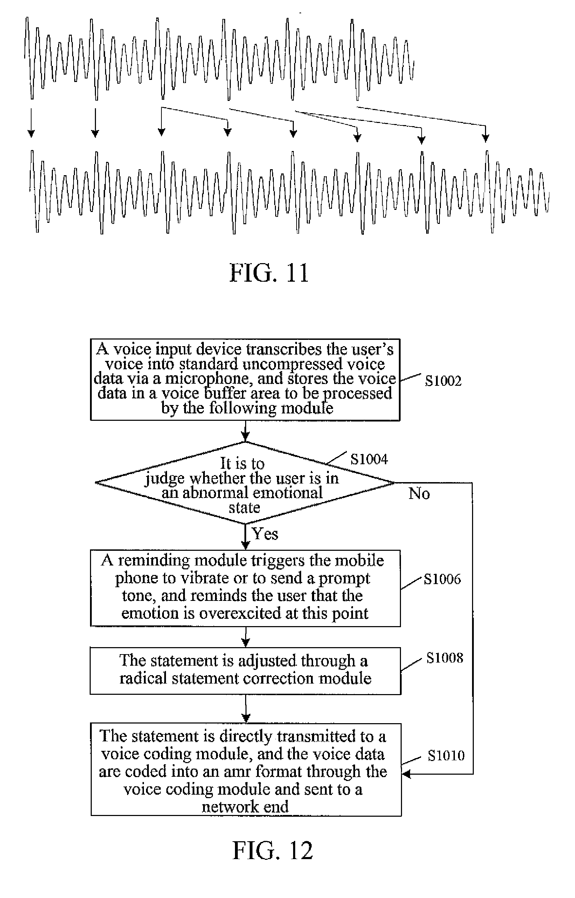

FIG. 11 is a schematic diagram of an adjustment effect of the statement duration according to the embodiment of the present invention, and as shown in FIG. 11, through the adjustment of statement duration, the duration is increased to 1.5 times of the original voice duration. It should be noted that a variation of the duration is less than the minimum interval time T between the statements in anger counted by the emotion database.

The correction of the radical statement is completed through the processing of the above four steps, and the voice data processed by the radical statement correction module will not contain factors of angry emotions and indecent vocabularies.

The main function of the voice coding module is to compress the uncompressed voice data into an amr voice format suitable for network transmission.

Based on the structure of the mobile terminal framework introduced in the above embodiment, the method for transmitting the voice data in the mobile terminal framework will be introduced through the preferred embodiment below. When the user is in the call process, the sound is input via a microphone of the mobile phone, and transcribed into an uncompressed voice file through a certain sampling frequency, bit and sound channel, and stored in the voice buffer area to be processed by the voice emotion identification module, and the voice emotion identification module extracts a characteristic parameter of the voice data in the voice buffer area, compares the characteristic parameter of the voice data with a characteristic parameter in the emotion voice database, to judge the user's emotion at this point, and if the user is excited at the moment and is in abnormal emotional states such as anger and so on, the voice emotion identification module will trigger the reminding module to vibrate the mobile phone so as to remind the user to adjust the emotion in time, which avoids that the emotion is out of control. While judging the user's emotion, the emotion voice database also will count the voice characteristic parameter of the user at the moment and the minimum interval time T between statements in anger, and will correct and adjust the data of the basic database, so that the voice emotion identification module is more easy and accurate to identify the user's emotion and generate an adjustment parameter, and the adjustment parameter can be used as an adjustment parameter for adjusting the subsequent angry statements. Moreover, the voice emotion identification module also will compare the indecent vocabulary with an indecent vocabulary in the indecent vocabulary library, to see whether there is an indecent word in the call, and if there is an indecent word, it also will trigger the reminding module to vibrate the mobile phone, to remind the user to pay attention to the diction. If the voice emotion identification module judges that the user is angry at this point or there is an indecent word, the radical statement correction module is required to perform correction processing on the statement, and by adjusting the pitch frequency, energy and duration of the angry statement at the moment, the angry statement is converted into a statement in the normal emotion. If the indecent word is contained, the volume of the indecent word is lowered, and the indecent word is weakened. After the correction is completed, the corrected voice data are transmitted to the voice coding module, and the voice data are coded into an amr format suitable for network transmission, and then transmitted to the network end through the antenna of mobile phone. If the voice emotion identification module judges that the user is not angry and the indecent vocabulary is not contained, the voice data will be directly transmitted to the voice coding module and coded into an amr format, and be transmitted to the network end through the antenna of mobile phone.

The technical scheme of the present invention will be introduced in detail through the accompanying drawing and preferred embodiment below.

In the embodiment, a sentence "jin tian de gong zuo yi ding yao wan cheng" is taken as an example to describe the process of emotion control and adjustment in the voice call, FIG. 12 is a flow chart of the process of emotion control and adjustment in the voice call according to the embodiment of the present invention, and as shown in FIG. 12, the process includes the following steps (step S1002-step S1010).

In step S1002, when the user is in a call, the statement content of the call is "jin tian de gong zuo yi ding yao wan cheng", and a voice input device transcribes the user's voice into standard uncompressed voice data via a microphone, and stores the voice data in a voice buffer area to be processed by a voice emotion identification module.

In step S1004, the voice emotion identification module will identify and judge the statement, and determine whether the user is in an abnormal emotional state and whether an indecent vocabulary is carried in the statement. If yes, step S1006 is executed, and if no, step S1010 is executed.

Firstly, an emotion characteristic parameter of the statement is extracted, and the emotion characteristic parameter is compared with an emotion characteristic parameter stored in an emotion voice database, if the user's emotion is overexcited at this point, the voice emotion identification module will judge that the overall pitch frequency of the statement is faster than the pitch frequency in a normal voice database, especially the two syllables "yi ding". In addition, the energy of the whole statement is higher than energy in the normal voice database, especially the two syllables "yi ding". Moreover, the duration of each syllable of the statement is shorter than the duration in the normal voice database, especially the two syllables "yi ding". The voice emotion identification module judges that the user's emotion is overexcited at this point according to these characteristics, and triggers a reminding module to vibrate the mobile phone or send a prompt tone, to remind the user that the emotion is overexcited.

If the user's emotion is normal at this point, the voice emotion identification module will judge that there is a small difference between the overall pitch frequency, energy and duration of the statement and characteristic parameter values in the normal voice database, In addition, there is a small difference among the characteristic parameter values of all the syllables, and there is no significant change. It can be judged that the user's emotion is normal at this point according to these characteristics, and it can directly skip to step S1010 to perform processing. Moreover, the voice emotion identification module then judges whether an indecent vocabulary is carried in the call process of the user, and it is obvious that no indecent vocabulary is contained at this point.

In step S1006, the reminding module triggers the mobile phone to vibrate or to send a prompt tone, and reminds the user that the emotion is overexcited at this point.

In step S1008, if it is judged that the user's emotion is angry at this point in the above step S1004, it is required to adjust the statement through a radical statement correction module.

Firstly, the overall pitch frequency of the statement is regulated down, especially the pitch frequency of the two syllables "yi ding" are adjusted to the pitch frequency in the normal voice, and each syllable of the statement is multiplied by one coefficient, the energy of the statement is adjusted to the energy of the normal voice, and each syllable in the statement is lengthened to the duration in the normal voice through a TD-PSOLA algorithm, and through the adjustment, the statement is then transmitted to a voice coding module to be processed.

In step S1010, it is judged that the user's emotion is normal at this point in the step S1004, thus the statement can be directly transmitted to the voice coding module, and the voice data are coded into an amr format through the voice coding module and transmitted to a network end.

Finally, the voice data "jin tian de gong zuo yi ding yao wan cheng" received by the called party are basically identical with the effect expressed in the normal emotion, and the case of information loss will not occur in the meantime, which is conducive to maintaining the image of the user and the interpersonal communication of the user.

As can be seen from the above descriptions, in the embodiments of the present invention, the emotion and diction in the process of voice call are monitored in real time, and the voice emotion is controlled and adjusted according to the need, and finally the control and adjustment of the emotion in the process of voice call is implemented on the mobile device, which achieves the object of maintaining the personal image, improving the work effect, and enhancing the interpersonal ability.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

Though the preferred embodiments of the present invention have been disclosed for the purpose of illustration, the skilled in the art will realize that various improvements, additions and replacements are also possible, and therefore, the scope of the present invention should not be limited to the above embodiments.

### Industrial Applicability

With the method and device of the embodiments of the present invention, the problem that the communication effect is affected when the mobile user is in an abnormal emotional state in the related art is solved, which is conducive to maintaining the personal image, improving the work effect, and enhancing the interpersonal ability.

## Claims

1. A method for transmitting voice data, comprising:
based on a preset statement database to be adjusted, monitoring voice data required to be sent by a sending end;
when monitoring that the voice data are required to be adjusted, adjusting the voice data according to a set standard voice format; and
transmitting adjusted voice data to a receiving end.

2. The method according to claim 1, wherein the step of based on a preset statement database to be adjusted, monitoring voice data sent by a sending end comprises:
extracting a characteristic parameter in the voice data; and based on whether the characteristic parameter is matched with a first characteristic parameter stored in the statement database to be adjusted, monitoring the voice data; and/or,
extracting a vocabulary in the voice data; and based on whether the vocabulary is matched with a preset vocabulary stored in the statement database to be adjusted, monitoring the voice data.

3. The method according to claim 1, after the step of monitoring that the voice data are required to be adjusted, further comprising: sending a prompt signal.

4. The method according to claim 1, wherein the step of adjusting the voice data according to a set standard voice format comprises:
acquiring a pitch frequency parameter of the voice data, and according to the set standard voice format, adjusting the pitch frequency parameter of the voice data in accordance with a time domain synchronization algorithm and a pitch frequency adjustment parameter; and/or,
acquiring voice energy of the voice data, and according to the set standard voice format, adjusting the voice energy in accordance with an energy adjustment parameter; and/or,
extending a statement duration of the voice data according to the set standard voice format.

5. The method according to claim 2, wherein the step of adjusting the voice data according to a set standard voice format comprises:
searching whether a polite vocabulary corresponding to the preset vocabulary exists in the statement database to be adjusted; and
when the polite vocabulary corresponding to the preset vocabulary exists, replacing the preset vocabulary with the polite vocabulary.

6. A device for transmitting voice data, comprising:
a monitoring module, configured to: based on a preset statement database to be adjusted, monitor voice data required to be sent by a sending end;
an adjustment module, configured to: when monitoring that the voice data are required to be adjusted, adjust the voice data according to a set standard voice format; and
a transmission module, configured to: transmit adjusted voice data to a receiving end.

7. The device according to claim 6, wherein the monitoring module comprises:
a first monitoring unit, configured to: extract a characteristic parameter in the voice data; and based on whether the characteristic parameter is matched with a first characteristic parameter stored in the statement database to be adjusted, monitor the voice data; and/or,
a second monitoring unit, configured to: extract a vocabulary in the voice data; and based on whether the vocabulary is matched with a preset vocabulary stored in the statement database to be adjusted, monitor the voice data.

8. The device according to claim 6, further comprising:
a prompt module, configured to: send a prompt signal.

9. The device according to claim 6, wherein the adjustment module comprises:
a first adjustment unit, configured to: acquire a pitch frequency parameter of the voice data, and according to the set standard voice format, adjust the pitch frequency parameter of the voice data in accordance with a time domain synchronization algorithm and a pitch frequency adjustment parameter; and/or,
a second adjustment unit, configured to: acquire voice energy of the voice data, and according to the set standard voice format, adjust the voice energy in accordance with an energy adjustment parameter; and/or,
a third adjustment unit, configured to: extend a statement duration of the voice data according to the set standard voice format.

10. The device according to claim 7, wherein the adjustment module further comprises:
a searching unit, configured to: search whether a polite vocabulary corresponding to the preset vocabulary exists in the statement database to be adjusted; and
a replacement unit, configured to: in a case that a search result of the searching unit is that the polite vocabulary corresponding to the preset vocabulary exists in the statement database to be adjusted, replace the preset vocabulary with the polite vocabulary.
